# EUROPÄISCHE PATENTSCHRIFT

(11) **EP 1 977 086 B1**
(45) Veröffentlichungstag und Bekanntmachung des Hinweises auf die Patenterteilung: **20.05.2009**
(21) Anmeldenummer: 07703819.8
(22) Anmeldetag: 12.01.2007
(51) Int. Cl.: F01D 25/24, F02B 37/00

(54) **KOMPRESSORGEHÄUSE FÜR EINEN ABGASTURBOLADER**
COMPRESSOR CASING FOR AN EXHAUST GAS TURBOCHARGER
CARTER DE COMPRESSEUR D'UN TURBOCOMPRESSEUR À GAZ D'ÉCHAPPEMENT

(30) Priorität: 25.01.2006 DE 102006003599
(43) Veröffentlichungstag der Anmeldung: 08.10.2008
(73) Patentinhaber: Continental Automotive GmbH, 30165 Hannover (DE)
(72) Erfinder: ANTE, Johannes, 93055 Regensburg (DE); GILCH, Markus, 85419 Mauern (DE)
(86) Internationale Anmeldenummer: PCT/EP2007/050278
(87) Internationale Veröffentlichungsnummer: WO 2007/085535

(56) Entgegenhaltungen:
- EP-A2- 0 310 426
- WO-A-20/06005662
- US-A1- 2005 017 709
- SCHROTT K H: "DIE NEUE GENERATION DER MAN-B&W-TURBOLADER" MTZ MOTORTECHNISCHE ZEITSCHRIFT, VIEWEG VERLAG, WIESBADEN, DE, Bd. 56, Nr. 10, 1. Oktober 1995 (1995-10-01), Seiten 596-601, XP000532350 ISSN: 0024-8525

## Beschreibung

Die Erfindung betrifft ein im Spritzgussverfahren hergestelltes Kompressorgehäuse für einen Abgasturbolader, der eine Turbowelle aufweist, die mit einem Kompressorrad und einem Turbinenrad mechanisch verbunden ist sowie ein Verfahren zur Herstellung des Kompressorgehäuses.

Die von einer Brennkraftmaschine erzeugte Leistung hängt von der Luftmasse und der Kraftstoffmenge ab, die der Maschine zur Verbrennung zur Verfügung gestellt werden kann. Um die Leistung einer Brennkraftmaschine zu steigern, muss die zugeführte Menge der Verbrennungsluft und des Kraftstoffs gesteigert werden. Diese Leistungssteigerung wird bei einem Saugmotor durch eine Hubraumvergrößerung oder durch die Erhöhung der Drehzahl erreicht. Eine Hubraumvergrößerung führt aber grundsätzlich zu schwereren in den Abmessungen größeren und damit teureren Brennkraftmaschinen. Die Steigerung der Drehzahl bringt besonders bei größeren Brennkraftmaschinen erhebliche Probleme und Nachteile mit sich und ist aus technischen Gründen begrenzt.

Eine viel genutzte technische Lösung zur Steigerung der Leistung einer Brennkraftmaschine ist die Aufladung. Damit bezeichnet man die Vorverdichtung der Verbrennungsluft durch einen Abgasturbolader oder auch mittels eines vom Motor mechanisch angetriebenen Verdichters. Ein Abgasturbolader besteht im Wesentlichen aus einem Strömungsverdichter und einer Turbine, die mit einer gemeinsamen Turbowelle verbunden sind und mit der gleichen Drehzahl rotieren. Die Turbine setzt die normalerweise nutzlos verpuffende Energie des Abgases in Rotationsenergie um und treibt den Verdichter an. Der Verdichter, der in diesem Zusammenhang auch als Kompressor bezeichnet wird, saugt Frischluft an und fördert die vorverdichtete Luft zu den einzelnen Zylindern des Motors. Der größeren Luftmenge in den Zylindern kann eine erhöhte Kraftstoffmenge zugeführt werden, wodurch die Verbrennungskraftmaschine mehr Leistung abgibt. Der Verbrennungsvorgang wird zudem günstig beeinflusst, so dass die Verbrennungskraftmaschine einen besseren Gesamtwirkungsgrad erzielt. Darüber hinaus kann der Drehmomentverlauf einer mit einem Turbolader aufgeladenen Brennkraftmaschine äußerst günstig gestaltet werden. Bei Fahrzeugherstellern vorhandene Seriensaugmotoren können durch den Einsatz eines Abgasturboladers ohne große konstruktive Eingriffe an der Brennkraftmaschine wesentlich optimiert werden. Aufgeladene Brennkraftmaschinen haben in der Regel einen geringeren spezifischen Kraftstoffverbrauch und weisen eine geringere Schadstoffemission auf. Darüber hinaus sind turbogeladene Motoren leiser als Saugmotoren gleicher Leistung, da der Abgasturbolader selbst wie ein zusätzlicher Schalldämpfer wirkt.

Für Brennkraftmaschinen mit einem großen Betriebsdrehzahlbereich, zum Beispiel für Pkw Brennkraftmaschinen, wird schon bei niedrigen Motordrehzahlen ein hoher Ladedruck gefordert. Dafür wird bei diesen Turboladern ein Ladedruckregelventil, ein so genanntes Waste-Gate-Ventil, eingeführt. Durch die Wahl eines entsprechenden Turbinengehäuses wird schon bei niedrigen Motordrehzahlen schnell ein hoher Ladedruck aufgebaut. Das Ladedruckregelventil (Waste-Gate-Ventil) begrenzt dann bei steigender Motordrehzahl den Ladedruck auf einen gleich bleibenden Wert. Alternativ dazu kommen Turbolader mit variabler Turbinengeometrie (VTG) zum Einsatz. Bei diesen Turboladern wird der Ladedruck über die Veränderung der Turbinengeometrie reguliert.

Bei zunehmender Abgasmenge kann die maximal zulässige Drehzahl der Kombination aus dem Turbinenrad, dem Kompressorrad und der Turbowelle, die auch als Laufzeug des Turboladers bezeichnet wird, überschritten werden. Bei einer unzulässigen Überschreitung der Drehzahl des Laufzeuges würde dieses zerstört werden, was einem Totalschaden des Turboladers gleichkommt. Gerade moderne und kleine Turbolader mit deutlich kleineren Turbinen- und Kompressorraddurchmessern, die durch ein erheblich kleineres Massenträgheitsmoment ein verbessertes Drehbeschleunigungsverhalten aufweisen, werden vom Problem der Überschreitung der zulässigen Höchstdrehzahl betroffen. Je nach Ausführung des Turboladers führt schon eine Überschreitung der Drehzahlgrenze um etwa 5 % zur kompletten Zerstörung des Turboladers.

Zur Drehzahlbegrenzung haben sich die Ladedruckregelventile bewährt, die nach dem Stand der Technik von einem aus dem erzeugten Ladedruck resultierenden Signal angesteuert werden. Überschreitet der Ladedruck einen vorgegebenen Schwellwert, so öffnet das Ladedruckregelventil und leitet einen Teil des Abgasmassenstroms an der Turbine vorbei. Diese nimmt wegen des verringerten Abgasmassenstroms weniger Leistung auf, und die Kompressorleistung geht in gleichem Maße zurück. Der Ladedruck und die Drehzahl des Turbinenrades und des Kompressorrades werden verringert. Diese Regelung ist jedoch relativ träge, da der Druckaufbau bei einer Drehzahlüberschreitung des Laufzeuges mit einem zeitlichen Versatz erfolgt. Deshalb muss die Drehzahlregelung für den Turbolader mit der Ladedrucküberwachung besonders im hochdynamischen Bereich (Lastwechsel) durch entsprechend frühzeitige Ladedruckreduzierung eingreifen, was zu einem Wirkungsgradverlust führt.

Die Drehzahl der rotierenden Teile (Turbinenrad, Kompressorrad, Turbowelle) eines Abgasturboladers zu erfassen ist daher von Vorteil und wird in WO 2006/005662 A gezeigt. Die Aufgabe der vorliegenden Erfindung ist es, dies kostengünstig, sicher und genau zu bewerkstelligen. Diese Aufgabe wird erfindungsgemäß dadurch gelöst, dass mit dem Spritzgießen ein Sensor zur Messung der Drehzahl der Turbowelle in das Kompressorgehäuse eingebettet ist, womit der Sensor als in das Kompressorgehäuse selbst integriertes Bauteil ausgebildet ist.

Dies hat den Vorteil, dass in das Kompressorgehäuse keine Durchbohrungen oder Ausnehmungen eingebracht werden müssen, um einen Drehzahlsensor zu positionieren. Der Drehzahlsensor stellt ein in das Kompressorgehäuse integriertes Bauteil dar, das ohne jegliches Dichtungs- und Befestigungsmaterial auskommt. Dies vereinfacht die Herstellung des Turboladers wesentlich, reduziert die Herstellungskosten und trägt entscheidend zu einer verbesserten Haltbarkeit bei. Thermische Spannungen zwischen dem Drehzahlsensor und dem Kompressorgehäuse werden vollständig vermieden, da der Sensor in das Material des Kompressorgehäuses vollständig eingebettet ist.

Bei einer ersten Ausgestaltung besteht das Kompressorgehäuse aus einem Kunststoff. Moderne Kunststoffe vertragen die im Kompressor des Turboladers auftretenden Temperaturen problemlos, sind leicht, kostengünstig und lassen sich im Spritzgießverfahren verarbeiten. Da sie elektrisch isolierende Eigenschaften aufweisen, sind sie hervorragend geeignet die Bauteile des Sensors zu umgeben. Der Kunststoff schützt den Sensor vor äußeren Einflüssen und hält ihn in einer stabilen Lage im Bezug zur Turbowelle.

Alternativ dazu besteht das Kompressorgehäuse aus Aluminium. Auch Aluminium ist im Spritzgießverfahren gut zu verarbeiten. Unter dem Bergriff Spritzgießen sollen hier auch Verfahren wie das Druckgießen oder das Feingießen von Metallen verstanden werden. Metalle wie Aluminium sind sehr temperaturbeständig und formstabil. Wenn der Sensor von einem isolierenden Material, wie zum Beispiel Kunststoff, umgeben ist, kann er problemlos in das Kompressorgehäuse aus Aluminium eingebettet werden.

Wenn das Kompressorgehäuse aus mindestens einem ersten Teil und einem zweiten Teil besteht, kann eine vorteilhafte Materialwahl getroffen werden, wobei für die verschiedenen Teile jeweils Materialien mit den günstigsten Eigenschaften gewählt werden können. Dabei kann zum Beispiel das erste Teil des Kompressorgehäuses aus Aluminium oder Kunststoff bestehen. Auch das zweite Teil des Kompressorgehäuses kann wahlweise aus Aluminium oder Kunststoff bestehen. Entsprechend der speziellen Anforderungen können die verschiedenen Materialien optimal eingesetzt werden. Es ist auch denkbar, mehrere unterschiedliche metallische und Kunststoff- Materialien in dem mehrteiligen Kompressorgehäuse einzusetzen.

Bei einer nächsten Ausgestaltung umfasst der Sensor ein Sensorelement und/oder eine Signalverarbeitungselektronik und/oder einen Magnet. Die Signalverarbeitungselektronik kann das Rohsignal des Sensorelements vorteilhaft verarbeiten, da sie sehr nah am Sensorelement platziert ist, wodurch äußere elektromagnetische Störungen wenig Einfluss nehmen können. In der Signalverarbeitungselektronik kann das Rohsignal verstärkt werden und auch in ein digitales Signal gewandelt werden. Die analog-digital-Wandlung im Sensor ermöglicht es direkt standardisierte Signale zu liefern, wodurch das Kompressorgehäuse mit dem darin integrierten Sensor in verschiedenen Fahrzeugen eingesetzt werden kann, solange die Fahrzeuge diesem Standard entsprechen. Der Magnet im Sensor kann dazu benutzt werden das Magnetfeld zu erzeugen, dessen Variation gemessen werden soll. Die Variation des Magnetfeldes erfolgt dann durch ein Element zur Variation des Magnetfeldes, das vorzugsweise am kompressorseitigen Ende der Turbowelle ausgebildet ist.

Bei einer Weiterbildung ist das Sensorelement als Hall-Sensorelement ausgebildet. Hall-Sensorelemente eignen sich sehr gut zur Erfassung der Variation eines Magnetfeldes und sind daher sehr gut zur Drehzahlerfassung zu verwenden. Hall-Sensorelemente sind sehr kostengünstig zu erwerben und sie sind auch bei Temperaturen bis etwa 160°C einsetzbar.

Alternativ dazu ist das Sensorelement als magnetoresistives (MR) Sensorelement ausgebildet. MR Sensorelemente sind ihrerseits gut zur Erfassung der Variation eines Magnetfeldes geeignet und kostengünstig erwerbbar.

Bei einer nächsten alternativen Ausgestaltung ist das Sensorelement als induktives Sensorelement ausgebildet. Auch induktive Sensorelemente eigenen sich bestens zur Erfassung der Variation eines Magnetfeldes.

Bei einer Ausführungsform ist der Sensor als Mikromodul mit dem Sensorelement und/oder der Signalaufbereitungselektronik und/oder einer Schutzbeschaltung und/oder einer Entstörbeschaltung auf einem Leadframe ausgebildet. Diese Ausführungsform ist sehr wirtschaftlich, da der Leadframe mit den darauf ausgebildeten elektronischen Bauteilen direkt eingespritzt werden kann. Ein separates Sensorgehäuse entfällt hierbei völlig, da das Kompressorgehäuse auch das Sensorgehäuse bildet. Ist das Kompressorgehäuse aus einem Kunststoff gebildet, benötigt das Mikromodul auch keine separate elektrische Isolation, da auch die elektrische Isolation des Sensors durch den Kunststoff des Kompressorgehäuses erreicht wird. Zudem kann der Sensor nach dieser Ausführungsform besonders klein, kompakt und preiswert hergestellt werden. Der als Mikromodul ausgebildete Sensor kann auch in anderen Baugruppen zur Drehzahlmessung eingesetzt werden, etwa bei der Messung der Raddrehzahl eines Kraftfahrzeuges, der Drehzahl einer Nockenwelle im Motor oder der Drehzahl eines Getrieberades. Hierzu muss das Mikromodul nur noch in die entsprechenden Gehäuse eingespritzt werden.

Wenn der Leadframe auch die Anschlusspins bildet, ergibt sich eine einfache Möglichkeit die vom Sensor erzeugten Signale abzugreifen.

Bei einer Weiterbildung ist ein Anschlusskabel vorgesehen, das an einem Ende mit dem Sensor elektrisch verbunden ist und das in das Kompressorgehäuse teilweise mit eingespritzt ist. Das eingespritzte Anschlusskabel ermöglicht es das Signal des Sensors zu einer Verarbeitungselektronik im Fahrzeug zu führen, wobei den meist sehr ungünstigen Platzverhältnissen im Bereich des Turboladers optimal entsprochen werden kann. Darüber hinaus lässt sich ein Kunststoffmantel, den die meisten Kabel zur elektrischen Isolation besitzen, hervorragend wasser- und schadstoffdicht in das Kompressorgehäuse einspritzen.

Ausführungsformen der Erfindung werden in den Figuren beispielhaft dargestellt. Es zeigen:
- Fig. 1:: einen Abgasturbolader,
- Fig. 2:: einen Abgasturbolader mit einem Sensor zur Messung der Drehzahl der Turbowelle nach dem Stand der Technik,
- Fig. 3:: eine Ausführungsform des erfindungsgemäßen Kompressorgehäuses,
- Fig. 4:: eine weitere Ausführungsform des erfindungsgemäßen Kompressorgehäuses,
- Fig. 5:: einen als Mikromodul ausgebildeten Sensor,
- Fig. 6:: einen Sensor mit einem in das Kompressorgehäuse integriertem Anschlusskabel.

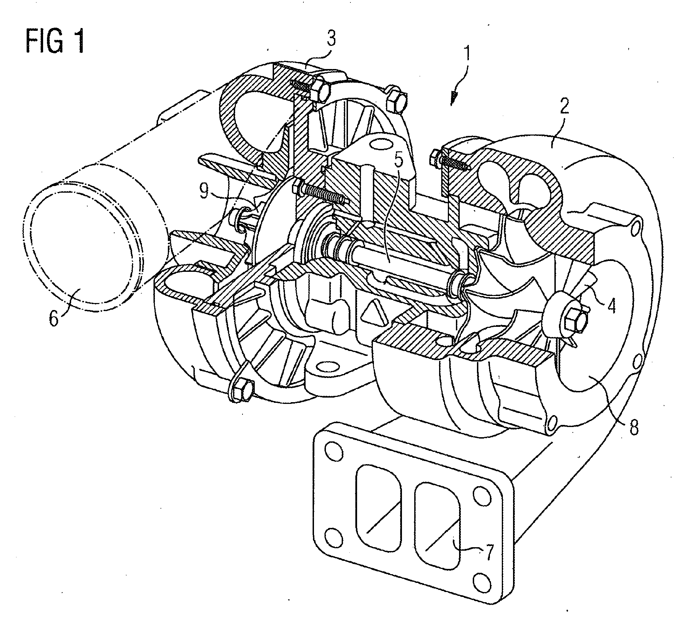

Figur 1 zeigt einen Abgasturbolader 1 mit einer Turbine 2 und einem Kompressor 3. Im Kompressor 3 ist das Kompressorrad 9 drehbar gelagert und mit der Turbowelle 5 verbunden. Auch die Turbowelle 5 ist drehbar gelagert und an ihrem anderen Ende mit dem Turbinenrad 4 verbunden. Über den Turbineneinlass 7 wird heißes Abgas von einer hier nicht dargestellten Verbrennungskraftmaschine in die Turbine 2 eingelassen, wobei das Turbinenrad 4 in Drehung versetzt wird. Der Abgasstrom verlässt die Turbine 2 durch den Turbinenauslass 8. Über die Turbowelle 5 ist das Turbinenrad 4 mit dem Kompressorrad 9 verbunden. Damit treibt die Turbine 2 den Kompressor 3 an. In den Kompressor 3 wird Luft durch den Lufteinlass 10 eingesaugt, die dann im Kompressor 3 verdichtet und über den Luftauslass 6 einer hier nicht dargestellten Verbrennungskraftmaschine zugeführt wird.

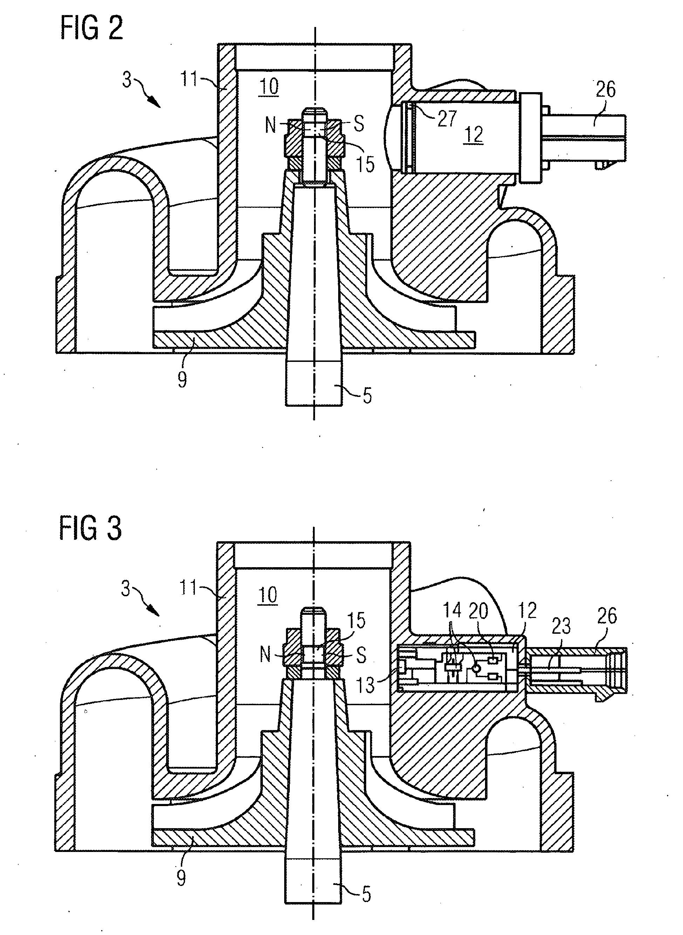

Figur 2 zeigt den Kompressor 3 eines Abgasturboladers 1 mit einem Sensor 12 zur Messung der Drehzahl der Turbowelle 5 nach dem Stand der Technik. Der Abgasturbolader 1 umfasst eine Turbowelle 5, auf der das Kompressorrad 9 angeordnet ist. Im kompressorseitigen Ende der Turbowelle 5 findet sich ein Magnet 15, der einen Nordpol N und einen Südpol S aufweist. Mit der Drehung der Turbowelle 5 erfolgt eine Drehung des Magneten 15, womit sich das vom Nord- und Südpol erzeugte magnetische Feld im Bezug auf den Sensor 12 ändert. Nach dem Stand der Technik ist der Sensor 12 als separates Bauteil in einer Ausnehmung des Kompressorgehäuses 11 angeordnet. Hierzu ist eine Dichtung 27 vorgesehen, die das Kompressorgehäuse 11 im Bereich des Sensors 12 abdichtet. Die Montage des Sensors 12 im Kompressorgehäuse 11 ist relativ aufwändig, da das Kompressorgehäuse 11 ein thermisch relativ hoch belastetes Bauteil ist und es infolge unterschiedlicher Wärmedehnungskoeffizienten zu mechanischen Spannungen zwischen dem Kompressorgehäuse 11 und dem Sensor 12 kommen kann. Darüber hinaus ist der Einbau des Sensors 12 in das Kompressorgehäuse 11 ein zusätzlicher Arbeitsschritt bei der Herstellung des Abgasturboladers 1, der diesen unnötig verteuert.

Figur 3 zeigt eine Ausführungsform des erfindungsgemäßen Kompressorgehäuses 11. Der Kompressor 3 des Abgasturboladers 1 umfasst wiederum das Kompressorgehäuse 11, eine Turbowelle 5 und das darauf angeordnete Kompressorrad 9. Am kompressorseitigen Ende der Turbowelle 5 im Lufteinlass 10 ist der Magnet 15 angeordnet. Bei der Drehung der Turbowelle 5 dreht sich der Nordpol N und der Südpol S mit der Turbowelle 5 mit. Die hieraus resultierende Änderung des magnetischen Feldes am Sensor 12 wird vom Sensorelement 13 erfasst. Der Sensor 12 besteht hier aus einem Sensorelement 13 und einer Signalaufbereitungselektronik 14, die zusammen mit dem Sensorelement 13 auf einem Leadframe 20 angeordnet ist. Der so gebildete Sensor 12 ist vollkommen in das Material des Kompressorgehäuses 11 eingebettet. Es ist deutlich zu erkennen, dass der Sensor 12 nicht nachträglich im Kompressorgehäuse 11 montiert werden muss, sondern bei der Herstellung des Kompressorgehäuses 11 im Spritzgussverfahren in das Kompressorgehäuse 11 eingebettet wurde, womit der Sensor 12 als integraler Bestandteil des Kompressorgehäuses 11 selber ausgebildet ist. Das Kompressorgehäuse 11 kann im Spritzgussverfahren zum Beispiel aus Kunststoff hergestellt werden. Moderne Kunststoffe sind in soweit temperaturbeständig, dass sie sich zum Einsatz als Kompressorgehäuse 11 für Abgasturbolader 1 eignen. Darüber hinaus kann das Kompressorgehäuse 11 auch aus Aluminium im Spritzgussverfahren (auch Druck- und Feinguss) hergestellt werden. Um den Sensor 12 im Aluminiumkompressorgehäuse 11 zu integrieren, ist es denkbar, das Sensorelement 13 die Signalverarbeitungselektronik 14 und den Leadframe 20 vorher elektrisch zu isolieren, um einen elektrischen Kontakt dieser Komponenten zum Kompressorgehäuse 11 aus Aluminium zu vermeiden.

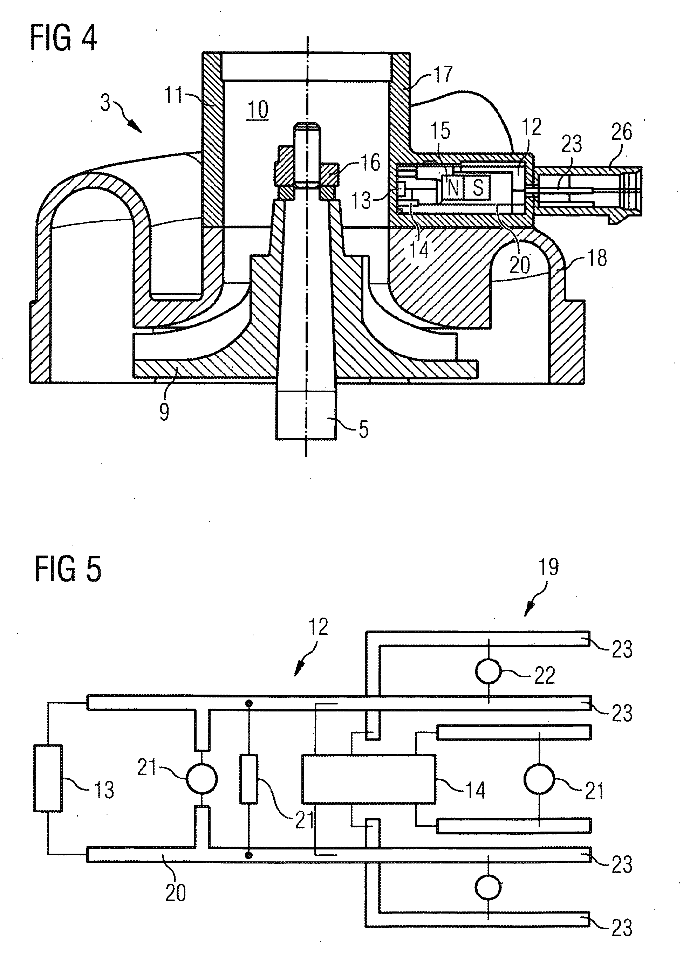

Figur 4 zeigt eine weitere Ausführungsform des erfindungsgemäßen, im Spritzgussverfahren hergestellten Kompressorgehäuses 11 mit dem Sensor 12 zur Messung der Drehzahl der Turbowelle 5. Hier ist das Kompressorgehäuse 11 zweiteilig ausgebildet. Ein erster Teil 17 des Kompressorgehäuses 11 nimmt den Sensor 12 als integralen Bestandteil auf. Der Sensor 12 umfasste hier das Sensorelement 13, eine Signalaufbereitungselektronik 14 und den Magnet 15. Auch hier sind die Signalaufbereitungselektronik 14 und das Sensorelement 13 auf einem Leadframe 20 angeordnet. Darüber hinaus kann auch der Magnet 15 auf dem Leadframe 20 angeordnet sein. Der Leadframe 20 bildet weiterhin die Anschlusspins 23, die aus dem Kompressorgehäuse 11 herausragen, wobei im Bereich der Anschlusspins 23, zur Verbindung der Anschlusspins 23 mit einer nachfolgenden Elektronik, ein Steckergehäuse 26 ausgebildet ist. Die zweiteilige Ausbildung des Kompressorgehäuses 11 hat den Vorteil, dass sowohl für das erste Teil 17 des Kompressorgehäuses 11 als auch für das zweite Teil 18 des Kompressorgehäuses 11 das zweckmäßigste Material gewählt werden kann. Es ist zum Beispiel denkbar, dass das erste Teil 17 des Kompressorgehäuses 11 aus einem Kunststoff gebildet ist, während das zweite Teil 18 des Kompressorgehäuses 11 aus Aluminium im Spritzgussverfahren hergestellt ist. Der Sensor 12 bildet wiederum einen integralen Bestandteil des Kompressorgehäuses 11.

In diesem Ausführungsbeispiel ist im Sensor 12 der Magnet 15 mit seinem Nord- und seinem Südpol angeordnet. Das vom Magnet 15 erzeugte Magnetfeld durchströmt den Sensor 13 und erreicht ein Element 16 zur Variation des Magnetfeldes. Dieses Element 16 zur Variation des Magnetfeldes kann zum Beispiel als magnetisch leitender Körper ausgebildet sein, der sich mit der Turbowelle 5 dreht und der derart geformt ist, dass er das Magnetfeld in einer Stellung sammelt und in einer anderen Stellung zerstreut. Diese Änderung des Magnetfeldes erfolgt proportional zur Drehzahl der Turbowelle, da sich das Element 16 zur Variation des Magnetfeldes mit der Turbowelle 5 mitdreht. Die Änderung des Magnetfeldes wird vom Sensorelement 13 erfasst, das ein drehzahlproportionales Signal an die Signalaufbereitungselektronik 14 abgibt.

Figur 5 zeigt den als Mikromodul 19 ausgebildeten Sensor 12. Der Sensor 12 ist hier auf einem Leadframe 20 aufgebaut, wobei der Leadframe 20 mit einem Sensorelement 13, einer Schutzbeschaltung 21, einer Entstörbeschaltüng 22 und einer Signalaufbereitungselektronik 14 bestückt ist. Der Leadframe 20 ist ein Stanzblechteil, das den eben genannten Komponenten mechanischen Halt gibt und sie elektrisch miteinander verbindet. Weiterhin bildet der Leadframe 20 auch die Anschlusspins 23. Das gesamte Mikromodul 19 kann zum Schutz vor elektrisch leitenden Verbindungen, etwa mit dem Aluminiumspritzguss des Kompressorgehäuses 11, mit einem Isolator umspritzt werden.

Als Isolator kommen zum Beispiel spritzbare Polymere infrage. Das so ausgebildete Mikromodul 19 kann in ein Spritzgusswerkzeug eingelegt werden, das zur Herstellung des Kompressorgehäuses 11 verwendet wird. Damit wird der als Mikromodul 19 ausgebildete Sensor 12 direkt mit in das Kompressorgehäuse 11 eingespritzt und zum integralen Bestandteil des Kompressorgehäuses 11.

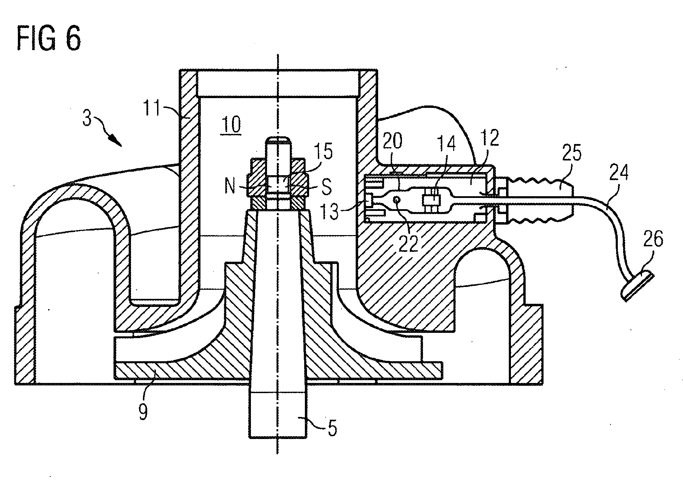

Figur 6 zeigt wiederum den Kompressor 3 mit der darin angeordneten Turbowelle 5 und dem Kompressorrad 9. In der Turbowelle 5 ist wiederum ein Magnet 15 ausgebildet, der entsprechend der Drehzahl der Turbowelle 5 ein veränderliches Magnetfeld im Sensorelement 13 erzeugt. Der Sensor 12 ist mit einem Sensorelement 13, einer Entstörschaltung 12 und einer Signalaufbereitungselektronik 14 auf einem Leadframe 20 aufgebaut. Hier ist in das Kompressorgehäuse 11 ein Anschlusskabel 24 integriert, das mit dem Sensor 12 elektrisch verbunden ist und dessen Signale einer nachfolgenden Kraftfahrzeugelektronik zuführt. Das Anschlusskabel 24 ist an einem Ende mit in das Kompressorgehäuse 11 eingespritzt. Weiterhin ist eine Zugentlastung 25 zu erkennen, die auch als Knickschutz ausgebildet sein kann. Am anderen Ende des integrierten Anschlusskabels 24 ist ein Steckergehäuse 26 zu erkennen.

Der Turbolader ist in der Regel im Kraftfahrzeug unter sehr bauraumbeengten Bedingungen verbaut, wodurch die Ausführung mit dem Anschlusskabel 24 sehr vorteilhaft ist, da das vom Sensor 12 erzeugte Signal damit problemlos einer nachfolgenden Elektronik zugeführt werden kann. Das Anschlusskabel 24 kann den Umständen entsprechend optimal verlegt werden. Zu beachten ist, dass durch die Signalaufbereitungselektronik 14 das vom Sensorelement 13 erzeugte Rohsignal schon vorverstärkt weitergeleitet wird und eventuell in eine digital auswertbare Signalform überführt ist, wodurch von außen eingestreute Störungen das Signal nicht wesentlich beeinflussen können. Die Signalaufbereitungselektronik 14 macht es somit möglich, dass Rohsignal vom Sensorelement über eine weite Strecke im Fahrzeuginnenraum zu führen, ohne dass das Signal in seiner Qualität gefährdet wäre. Damit ist die in Figur 6 dargestellte Lösung mit dem Anschlusskabel 24 nicht ausschließlich aber bevorzugt in Kombination mit der Signalaufbereitungselektronik 14 anzuwenden.

Durch die Integration des Sensors 20 in das Kompressorgehäuse 11 ergeben sich wesentliche fertigungstechnische und bauliche Vorteile sowie Vorteile im Hinblick auf die Lebensdauer des hier verwendeten Sensors 12 zur Messung der Drehzahl der Turbowelle 5. Der hier eingespritzte Sensor 12 wird durch das Material des Kompressorgehäuses 11 vollständig geschützt vor Umwelteinflüssen wie zum Beispiel Spritzwasser oder Salznebel, wie sie auf Straßen mit winterlichen Verhältnissen anzutreffen sind. Der Sensor 12 ist optimal abgedichtet, wobei Dichtungen, Einpassungen, Einschraub- und Befestigungspunkte zwischen dem Kompressorgehäuse 11 und dem Sensor 12 vollkommen entfallen. Das Mikromodul 19 stellt eine Baugruppe dar, die als Drehzahlsensor nicht nur im Turbolader 1 verwendet werden kann, sondern auch in anderen Geräten eingesetzt werden kann, was wiederum zu einer Kostenersparnis führt, da diese Baugruppe somit in sehr hohen Stückzahlen gefertigt werden kann. Darüber hinaus ist die vorteilhafte Bauraumeinsparung zu nennen, die gerade im räumlich beengten Bereich des Motorraums moderner Kraftfahrzeuge durchaus wesentlich ist.

## Patentansprüche

1. Im Spritzgussverfahren hergestelltes Kompressorgehäuse (11) für einen Abgasturbolader (1), der eine Turbowelle (5) aufweist, die mit einem Kompressorrad (9) und einem Turbinenrad (4) mechanisch verbunden ist, wobei ein Sensor (12) zur Messun der Drehzahl der Turbowelle (5) vorhanden ist, **dadurch gekennzeichnet, dass** der sensor (12) mit dem Spritzgießen in das Kompressorgehäuse (11) eingebettet ist, womit der Sensor (12) als in das Kompressorgehäuse (11) selbst integriertes Bauteil ausgebildet ist.

2. Im Spritzgussverfahren hergestelltes Kompressorgehäuse (11) nach Anspruch 1, **dadurch gekennzeichnet, dass** das Kompressorgehäuse (11) aus einem Kunststoff besteht.

3. Im Spritzgussverfahren hergestelltes Kompressorgehäuse (11) nach Anspruch 1, **dadurch gekennzeichnet, dass** das Kompressorgehäuse (11) aus Aluminium besteht.

4. Im Spritzgussverfahren hergestelltes Kompressorgehäuse (11) nach Anspruch 1, **dadurch gekennzeichnet, dass** das Kompressorgehäuse (11) mindestens aus einem ersten Teil (17) und einem zweiten Teil (18) besteht.

5. Im Spritzgussverfahren hergestelltes Kompressorgehäuse (11) nach Anspruch 4, **dadurch gekennzeichnet, dass** das erste Teil (17) des Kompressorgehäuses (11) aus Aluminium oder Kunststoff besteht.

6. Im Spritzgussverfahren hergestelltes Kompressorgehäuse (11) nach Anspruch 4, **dadurch gekennzeichnet, dass** das zweite Teil (18) des Kompressorgehäuses (11) aus Aluminium oder Kunststoff besteht.

7. Im Spritzgussverfahren hergestelltes Kompressorgehäuse (11) nach Anspruch 1, **dadurch gekennzeichnet, dass** der Sensor (12) ein Sensorelement (13) und/oder eine Signalverarbeitungselektronik (14) und/oder einen Magnet (15) umfasst.

8. Im Spritzgussverfahren hergestelltes Kompressorgehäuse (11) nach Anspruch 7, **dadurch gekennzeichnet, dass** das Sensorelement (13) als Hall-Sensorelement ausgebildet ist.

9. Im Spritzgussverfahren hergestelltes Kompressorgehäuse (11) nach Anspruch 7, **dadurch gekennzeichnet, dass** das Sensorelement (13) als magnetoresitives Sensorelement ausgebildet ist.

10. Im Spritzgussverfahren hergestelltes Kompressorgehäuse (11) nach Anspruch 7, **dadurch gekennzeichnet, dass** das Sensorelement (13) als induktives Sensorelement ausgebildet ist.

11. Im Spritzgussverfahren hergestelltes Kompressorgehäuse (11) nach mindestens einem der vorgenannten Ansprüche, **dadurch gekennzeichnet, dass** der Sensor (12) als Mikromodul (19) mit dem Sensorelement (13) und/oder der Signalaufbereitungselektronik (14) und/oder einer Schutzbeschaltung (21) und/oder einer Entstörbeschaltung (22) auf einem Leadframe (20) ausgebildet ist.

12. Im Spritzgussverfahren hergestelltes Kompressorgehäuse (11) nach Anspruch 11, **dadurch gekennzeichnet, dass** der Leadframe (20) auch die Anschlusspins (23) bildet.

13. Im Spritzgussverfahren hergestelltes Kompressorgehäuse (11) nach mindestens einem der vorgenannten Ansprüche, **dadurch gekennzeichnet, dass** ein Anschlusskabel (24) vorgesehen ist, das an einem Ende mit dem Sensor (12) elektrisch verbunden ist und in das Kompressorgehäuse teilweise mit eingespritzt ist.

14. Verfahren zur Herstellung eines Kompressorgehäuses (11) für einen Abgasturbolader (1), der eine Turbowelle (5) aufweist, die mit einem Kompressorrad (9) und einem Turbinenrad (4) mechanisch verbunden ist wobei ein Sensor (12) zur Messung der Drehzahl der Turbowelle (5) in ein Spritzgießwerkzeug für das Kompressorgehäuse (11) eingelegt wird und daraufhin das das Kompressorgehäuse (11) bildende Material in das Spritzgießwerkzeug eingespritzt wird, wobei der Sensor (12) zur Messung der Drehzahl der Turbowelle (5) von dem eingespritzten Material umschlossen wird, womit er als in das Kompressorgehäuse (11) selbst integriertes Bauteil ausgebildet wird.

## Claims

1. Compressor casing (11), produced by an injection-molding method, for an exhaust gas turbocharger (1) which has a turboshaft (5) which is mechanically connected to a compressor wheel (9) and a turbine wheel (4), with a sensor (12) being provided for measuring the rotational speed of the turboshaft (5), **characterized in that** the sensor (12) is embedded in the compressor casing (11) during the injection molding, whereby the sensor (12) is configured as a component integrated in the compressor casing (11) itself.

2. Compressor casing (11) produced by an injection-molding method according to Claim 1, **characterized in that** the compressor casing (11) is made from a plastics material.

3. Compressor casing (11) produced by an injection-molding method according to Claim 1, **characterized in that** the compressor casing (11) is made from aluminium.

4. Compressor casing (11) produced by an injection-molding method according to Claim 1, **characterized in that** the compressor casing (11) consists of at least a first part (17) and a second part (18).

5. Compressor casing (11) produced by an injection-molding method according to Claim 4, **characterized in that** the first part (17) of the compressor casing (11) is made from aluminium or plastics material.

6. Compressor casing (11) produced by an injection-molding method according to Claim 4, **characterized in that** the second part (18) of the compressor casing (11) is made from aluminium or plastics material.

7. Compressor casing (11) produced by an injection-molding method according to Claim 1, **characterized in that** the sensor (12) includes a sensor element (13) and/or signal processing electronics (14) and/or a magnet (15).

8. Compressor casing (11) produced by an injection-molding method according to Claim 7, **characterized in that** the sensor element (13) is in the form of a Hall sensor element.

9. Compressor casing (11) produced by an injection-molding method according to Claim 7, **characterized in that** the sensor element (13) is in the form of a magnetoresistive sensor element.

10. Compressor casing (11) produced by an injection-molding method according to Claim 7, **characterized in that** the sensor element (13) is in the form of an inductive sensor element.

11. Compressor casing (11) produced by an injection-molding method according to at least one of the preceding claims, **characterized in that** the sensor (12) is configured on a leadframe (20) as a micromodule (19) with the sensor element (13) and/or the signal processing electronics (14) and/or a protection circuit (21) and/or an interference suppression circuit (22).

12. Compressor casing (11) produced by an injection-molding method according to Claim 11, **characterized in that** the leadframe (20) also forms the connector pins (23).

13. Compressor casing (11) produced by an injection-molding method according to at least one of the preceding claims, **characterized in that** there is provided a connecting cable (24) which is connected electrically at one end to the sensor (12) and is partially injection-molded integrally in the compressor casing.

14. Method for producing a compressor casing (11) for an exhaust gas turbocharger (1) which has a turboshaft (5) which is mechanically connected to a compressor wheel (9) and a turbine wheel (4), a sensor (12) for measuring the rotational speed of the turboshaft (5) being placed in an injection-molding tool for the compressor casing (11) and the material forming the compressor casing (11) then being injected into the injection-molding tool, whereby the sensor (12) for measuring the rotational speed of the turboshaft (5) is enclosed by the injected material, so that it is configured as a component integrated in the compressor casing (11) itself.

## Revendications

1. Carter de compresseur (11), fabriqué à l'aide d'un procédé de moulage par injection et destiné à un turbocompresseur
(1) à gaz d'échappement, lequel a un arbre (5) de turbine lié mécaniquement à une roue de compresseur (9) et à une roue de turbine (4), où il y a un capteur (12) permettant de mesurer la vitesse de rotation de l'arbre (5) de turbine, **caractérisé par le fait que** le capteur (12) est noyé, lors du moulage par injection, dans le carter de compresseur (11), si bien que le capteur (12) lui-même est conçu en tant que pièce intégrée dans le carter de compresseur (11).

2. Carter de compresseur (11) selon la revendication 1, fabriqué à l'aide d'un procédé de moulage par injection, **caractérisé par le fait que** le carter de compresseur (11) est en matière plastique.

3. Carter de compresseur (11) selon la revendication 1, fabriqué à l'aide d'un procédé de moulage par injection, **caractérisé par le fait que** le carter de compresseur (11) est en aluminium.

4. Carter de compresseur (11) selon la revendication 1, fabriqué à l'aide d'un procédé de moulage par injection, **caractérisé par le fait que** le carter de compresseur (11) se compose au moins d'une première partie (17) et d'une deuxième partie (18).

5. Carter de compresseur (11) selon la revendication 4, fabriqué à l'aide d'un procédé de moulage par injection, **caractérisé par le fait que** la première partie (17) du carter de compresseur (11) est en aluminium ou en matière plastique.

6. Carter de compresseur (11) selon la revendication 4, fabriqué à l'aide d'un procédé de moulage par injection, **caractérisé par le fait que** la deuxième partie (18) du carter de compresseur (11) est en aluminium ou en matière plastique.

7. Carter de compresseur (11) selon la revendication 1, fabriqué à l'aide d'un procédé de moulage par injection, **caractérisé par le fait que** le capteur (12) comprend un élément capteur (13) et/ou un système électronique (14) de traitement de signaux et/ou un aimant (15).

8. Carter de compresseur (11) selon la revendication 7, fabriqué à l'aide d'un procédé de moulage par injection, **caractérisé par le fait que** l'élément capteur (13) est conçu sous la forme d'un élément capteur à effet Hall.

9. Carter de compresseur (11) selon la revendication 7, fabriqué à l'aide d'un procédé de moulage par injection, **caractérisé par le fait que** l'élément capteur (13) est conçu sous la forme d'un élément capteur magnétorésistif.

10. Carter de compresseur (11) selon la revendication 7, fabriqué à l'aide d'un procédé de moulage par injection, **caractérisé par le fait que** l'élément capteur (13) est conçu sous la forme d'un élément capteur inductif.

11. Carter de compresseur (11) selon au moins l'une des revendications précédentes, fabriqué à l'aide d'un procédé de moulage par injection, **caractérisé par le fait que** le capteur (12) est conçu sur une trame métallique support (20) (ou, en anglais, "leadframe") en tant que micromodule (19) comportant l'élément capteur (13) et/ou le système électronique (14) de traitement de signaux et/ou un circuit de protection (21) et/ou un circuit antiparasite (22).

12. Carter de compresseur (11) selon la revendication 11, fabriqué à l'aide d'un procédé de moulage par injection, **caractérisé par le fait que** la trame métallique support (20) forme également les plots (23) de raccordement.

13. Carter de compresseur (11) selon au moins l'une des revendications précédemment citées, fabriqué à l'aide d'un procédé de moulage par injection, **caractérisé par le fait qu**'il est prévu un câble de raccordement (24) relié électriquement par une extrémité au capteur (12) et incorporé partiellement par injection dans le carter de compresseur.

14. Procédé permettant de fabriquer un carter de compresseur (11) destiné à un turbocompresseur (1) à gaz d'échappement, lequel a un arbre (5) de turbine lié mécaniquement à une roue de compresseur (9) et à une roue de turbine (4), un capteur (12) permettant de mesurer la vitesse de rotation de l'arbre (5) de turbine étant incorporé dans un outil de moulage par injection pour le carter de compresseur (11) et, ensuite, la matière formant le carter de compresseur (11) étant injectée dans l'outil de moulage par injection, le capteur (12) permettant de mesurer la vitesse de rotation de l'arbre (5) de turbine étant alors enrobé par la matière injectée, si bien qu'il forme une pièce elle-même intégrée dans le carter de compresseur (11).
